Europäisches Patentamt

European Patent Office

Office européen des brevets

(11) Publication number: **0 076 612**
A1

# (12) EUROPEAN PATENT APPLICATION

(21) Application number: **82305068.7**

(22) Date of filing: **24.09.82**

(51) Int. Cl.³: **F 16 K 1/22**
**F 02 D 9/10**

(30) Priority: **29.09.81 US 306649**

(43) Date of publication of application:
**13.04.83 Bulletin 83/15**

(84) Designated Contracting States:
**DE FR GB IT SE**

(71) Applicant: Showalter, Merle Robert
301 South Blount Street
Madison Wisconsin 53703(US)

(72) Inventor: Showalter, Merle Robert
301 South Blount Street
Madison Wisconsin 53703(US)

(74) Representative: Hewlett, Arthur James et al,
STEVENS, HEWLETT & PERKINS 5 Quality Court
Chancery Lane
London WC2A 1HZ(GB)

## (54) Throttle valve.

(57) In a fluid control throttling valve assembly (13) for varying the throttling cross sectional area of flow as a function of valve shaft angle the valve includes a smoothly convergent surface (14) directly upstream of the throttling cross sectional area, an expansion chamber immediately downstream of the throttling cross sectional area to produce a fluid mechanically disruptive and very high expansion ratio sudden expansion directly downstream of the vena contracta of the flow so that the recirculating fluid (18) downstream of the throttling cross sectional area, with which the vena contracta flow interacts, is relatively low velocity and a downstream cusp face (17) curving so as to stabilize the recirculating flow whereby the merger of the convergent flow past said throttling cross sectional area of flow with the downstream entrained recirculating flow produces a substantially constant vena contracta area and thus a constant coefficient of discharge over the relevant operating Mach and Reynolds number range, of said throttling valve.

FIG. 2

Croydon Printing Company Ltd.

## "THROTTLE VALVE"

### Background and objects.

In a number of fluid control applications it is desirable to use variable area throttling valves with flow cross sectional area, Aa, as a function of a shaft angle $\theta$ varying according to the relation $Aa = b_1 (K_1 - \cos \theta)$ where $K_1 \leq 1$ where $b_1$ is a constant of proportionality. The balanced pivot butterfly valve is such a valve. Rectangular plug valves (which may be rigidly linked on the same shaft as butterfly valves) can also have area openings which obey the above equation. Flapper valves with unbalanced pivots are in this class also. It is desirable to have variable area throttles with flow characteristics which do not involve flow oscillations and where the fluid flow past the throttle obeys a simple isentropic flow equation to good approximation. For a liquid, the isentropic flow equation is $M_i = AaCo \sqrt{2g\, \rho\, \Delta P}$ where Co is the coefficient of discharge which compensates for flow contractions in the orifice. Application of this simple equation requires a valve where Co is essentially constant in the range of pressure drop (and hence Reynolds numbers) over which the valve works. For a valve throttling a gas, the relevant flow equation is the compressible flow equation $Mg = AaCo\, \Phi \sqrt{2g\sigma\, Po\, (\Delta Po)}$. For the compressible case it is again desirable that the value of Co for each open area Aa be effectively invariant over the range of pressure drops and gas densities over which the valve works. For a gas throttling valve this Co invarience requires that the valve Co at each opening be insensitive to a range of both Reynolds numbers and Mach numbers.

The inventor has, with associates at Southwest Research Institute, developed a fuel-air metering system utilizing a linked air and fuel throttle where each throttle has a Co characteristic which is pressure drop insensitive in the range of pressure drops across which the system operates.

To produce a throttling valve·showing a Co which is Reynolds and Mach number insensitive requires that the geometry of the flow streamlines of fluid passing through the throttling passage maintain a substantially invariant geometry over the operating range of Reynolds or Mach numbers over which the throttle is designed. This is believed to be the only way to hold the ratio of projected area Aa to vena contracta area constant, and this $\frac{A \text{ vena contracta}}{Aa}$ ratio essentially determines Co in the relatively high Reynolds number regime relevant to the isentropic flow equations.

It is relatively easy to control streamline shapes upstream of the minimum flow cross section Aa by means of smoothly convergent geometries. However, as the flow rushes past this minimum area it typically continues to contract in area due to inertial effects. The high speed downstream of the minimum passage area is also surrounded by recirculating fluid with which it interacts due to both drag and inertial effects. It is variations in the flow pattern of this recirculation fluid and variations in flow velocity ratios of recirculating fluid versus vena contracta fluid as a function of Reynolds and Mach numbers across the valve which produce Co variations of the valve versus Reynolds number and Mach number. To produce a valve with Co invariance over the relevant range of pressure drop requires one to produce recirculating flows which interact with the main vena contracta flow in a substantially invariant way over the required range of Reynolds and/or Mach numbers. The present invention shows ways this may be done.

There are two main approaches disclosed. The recirculating zone downstream of the valve restriction can be stabilized in a cusp which causes the secondary or parasitic vortex entrained flow·to merge smoothly and generally tangentially with the main or vena contracta stream, which stream is stabilized by wall attachment. The cusp stabilizes the recirculating flow and also minimizes the inertial forces of interaction between the recirculating flow and vena contracta flow by minimizing the merging angle between the recirculating and vena contracta flows. The cusped throttle disclosed has Co values relatively insensitive to Reynolds and Mach numbers for significant ranges of shaft angle $\theta$

The cusped arrangement has an important advantage beyond its stable Co characteristic. By stabilizing the interaction of the vena contracta and parasitic vortex flow it minimized the velocity dissipation of the vena contracta or main stream flow so that a significant fraction of this main stream flow vena contracta velocity can be delivered to a flow channel coherently, with the flow energy available to perform a useful function. For example, the high speed flow can drive a fuel-air mixing vortex according to the disclosure in United States Patent No. 4,318,386. The flow can be used in conjunction with the fluidic intake ports disclosed in United States Patent No. 4,344,394 to provide fuel-air residual gas mixing and speed combustion within engine cylinders. The cusped throttle can provide high energy streams for other flow purposes also.

However it is often useful (for example refer to United States Patent No. 4,318,868) to produce throttling valves with cross sectional flow area Aa varying as a function of shaft angle $\theta$ according to the relation Aa = b, (K, - cos $\theta$) K, $\leq$ 1 and having Co independent of pressure drop where the cusped geometry is inconvenient to make. For such small valves, maintenance of the velocity of the vena contracta stream is typically unimportant. For such small throttles, control of Co can be achieved by rapid expansion and turbulent dissipation of the flow downstream of the vena contracta with an abrupt and turbulent expansion of large ratio, which dissipates the flow energy of the main stream. In this way, the flow energy of the recirculating pattern of the valve can be suppressed. The vena contracta stream then has relatively constant Co characteristics because over the full operational range of Reynolds numbers the high speed flow is interacting with relatively quiescent recirculating fluid. Small values may have yet better insensitivity if they combine the above sudden expansion technique with a cusp which stabilizes the relatively low velocity recirculation.

The aforedescribed objects and advantages will become more apparent when taken in conjunction with the following detailed description and drawings illustrating by way of example preferred embodiments of this invention.

In the drawings

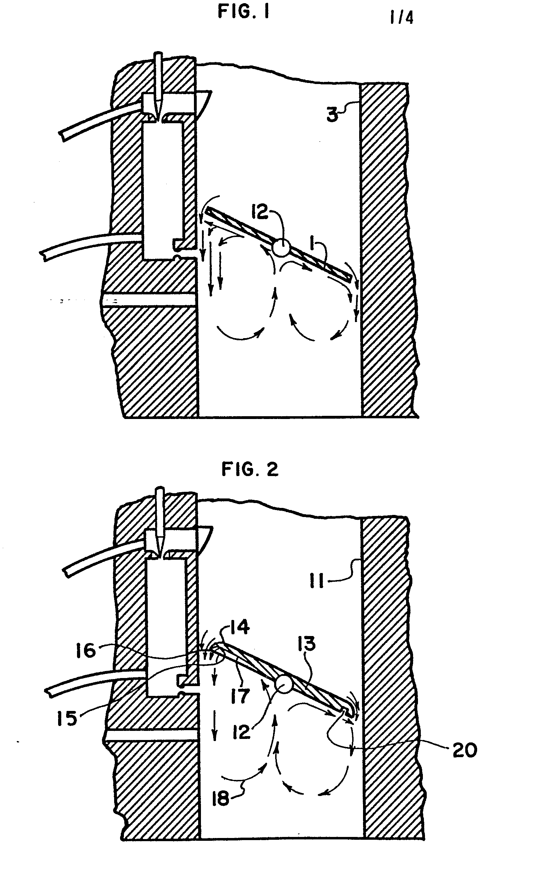

Figure 1 shows a conventional butterfly valve as used in an air-fuel mixer to faciliate discussion of flow instabilities and Mach number insensitivities.

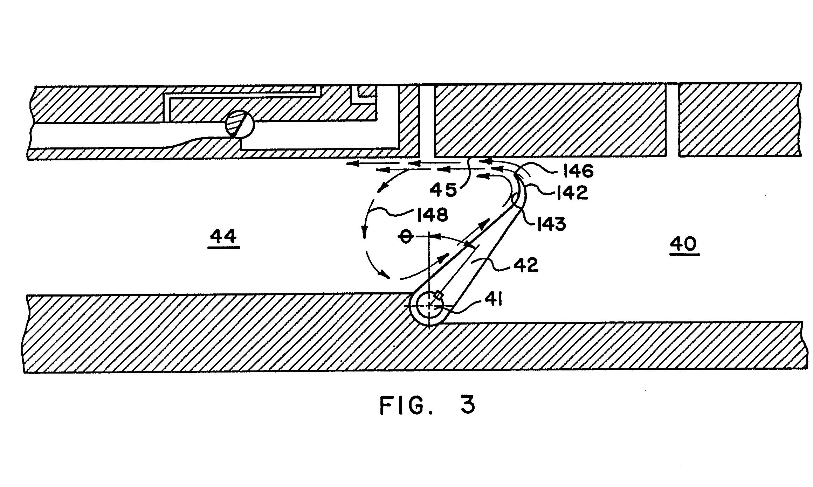

Figure 2 is similar to Figure 1 and shows in cross section a specially shaped butterfly valve where the flow instabilities are materially reduced and where the coefficient of discharge of the butterfly valve at any shaft angle is much less Mach and Reynolds number sensitive than in the case of Figure 1.

Figure 3 shows a shaped flapper valve pivoting on one end and having a smoothly convergent geometry interacting with a cusp. Such a valve has demonstrated very good Reynolds number and Mach number insensitivity. The cusped valve also stabilizes the recirculation downstream of the valve so as to minimize dissipation of high speed stream downstream of the vena contracta.

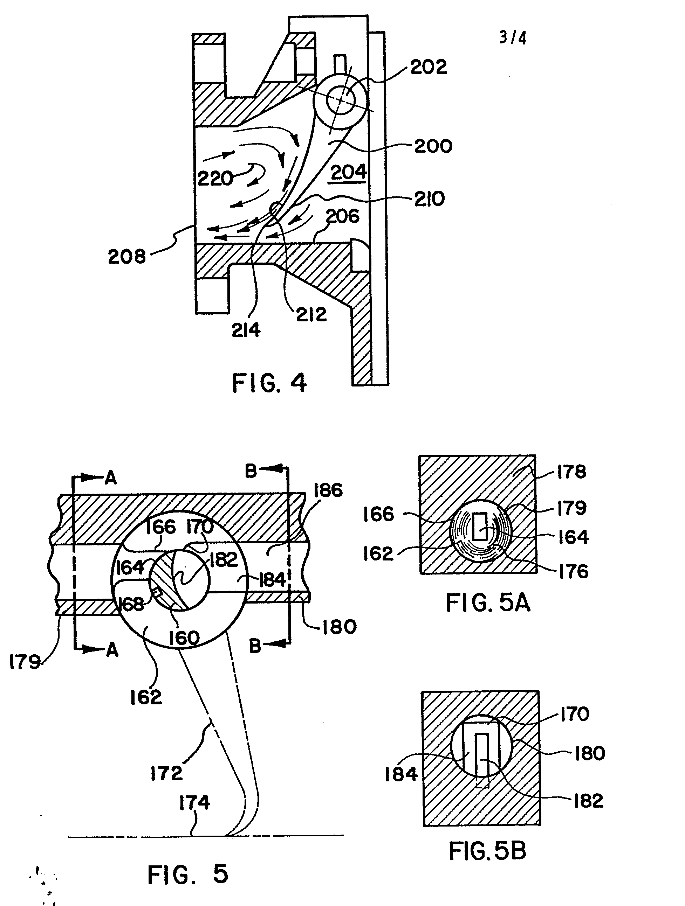

Figure 4 shows a flapper valve adapted for the inventor's variable restriction fluidic ports, disclosed in United States Patent No. 4,344,494 where the flap, in the condition of opening, produces a very smooth interaction between the main stream and the recirculating vortex driven by it, so that the dissipation of the high speed stream downstream of the flap is minimized.

Figure 5 is a cross sectional view of a plug valve on the same shaft as an air valve analogous to that of Figure 3 wherein the plug valve opens and closes a generally rectangular opening and where the high speed flow directly downstream of the plug valve is dissipated by a very rapid and large ratio expansion so that the recirculation zone from the vena contracta stream is of low energy and has small effect on the Reynolds number sensitivity of the valve with respect to coefficient of discharge.

Figure 5A is a view taken on line A-A of Figure 5, showing the smoothly convergent passages leading up to the throttling restriction.

Figure 5B is a view taken on line B-B of Figure 5 showing the rapid expansion used to dissipate flow energy from the vena contracta flow and therefore to reduce the energy of the recirculating zone which would otherwise produce a coefficient of discharge sensivity as a function of Reynolds number.

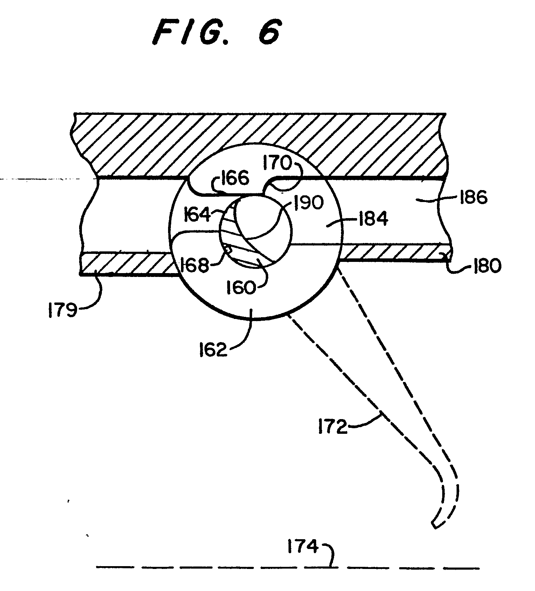

Figure 6 is a redrawing of Figure 5 which varies only in that the plug valve of Figure 5 is now provided with a cusped section in its downstream face to further reduce its coefficient of discharge sensitivity to Reynolds number variation.

Detailed description.

Referring to Figure 1, which is a cross sectional view of a typicaly butterfly valve in an air-fuel mixer, butterfly valve 1 pivots on shaft 12 in a circular passage 3. On the upwardly pivoting side of the butterfly 1 a convergent flow 4 passes and attaches to the wall of passage 3. Analogously on the lower pivoting side of valve 1 a flow 5 converges and attaches to the wall of passage 3. The upwardly pivoting side flow produces a recirculating parasitic vortex 6 and flow 5 produces an analogous recirculating vortex 7. There are many millions of throttles like this. These throttles are characterized by flow instability and extreme coefficient of discharge sensitivity to pressure drop. The flow past a throttle plate is somewhat unstable as a function of time because the relative shape and position of recirculating vortices 6 and 7 shifts with time, so that one of the vortices is much larger at one time than another. On occasion, one of the recirculating vortices will grow and then wash out, after which the flow field reforms in a never quite stable pattern. This flow instability may effect fluid mechanical arrangements downwstream of the butterfly valve. However, it is more relevant to the current case that the coefficient of discharge of a butterfly valve such as that shown in Figure 1 can vary by as much as 30% from Mach number to Mach number in the range in which the butterfly is actually used. There are several reasons for this. First of all, the butterfly valve is not shaped convergently so that the convergent streamlines cannot vary as a function of Mach number of the system. Butterfly valve 1 is simply a sharp edged plate. Moreover, downstream of the restriction the high speed flow interacts with a recirculating flow which attaches in a direction which is substantially perpendicular to flow as shown in vector 9 so that the velocity of the recirculating vortex flow will effect the ratio of open area AA to vena contracta area. It is for this reason that the throttle valve shows coefficient of discharge variations as a function of Reynolds and Mach number.

Figure 2 shows a butterfly valve analogous to that of Figure 1 which is arranged for smooth convergence of the flow and with a cusped section on the downstream side to alleviate many of the flow disadvantages of the valve of Figure 1. A specially shaped butterfly valve 13 pivots on shaft 12 within cylindrical passage 11. On the upwardly pivoting side (upstream) and also the downwardly pivoting side (downstream) are rounded convergent surfaces 14 and 15 respectively which are adapted to constrain the geometry of the convergent flow over the operating range of Reynolds and Mach numbers. On the upwardly pivoting side of throttle 13 downstream of the lip 16 is a cusped section 17 which serves to stabilize and deflect the parasitic vortex 18 in such a fashion as to greatly reduce vortex 18's variation of vena contracta geometry over the Reynolds and Mach number range relevant to operation of the throttle valve. The recirculating vortex 18 is stabilized in the cusp 17 and the high speed flow of the recirculation is turned until it is merely tangential with the high speed flow coming from above the throttle plate. When the primary flow and recirculating flow merge the inertial forces betweem them are relatively small, and the consequence is that the recirculating vortex has a relatively little Mach number effect on the vena contracta geometry. On the downwardly pivoting side of the throttle 13 is shown a groove 20, which serves to reduce the velocity of the recirculating flow which must merge with the high speed flow past lip 16 to reduce coefficient of discharge effecting interactions on that side also.

Those skilled in the fluid mechanical arts should readily appreciate that the butterfly shown in Figure 2 will be much less Mach number sensitive than the conventional butterfly shown in Figure 1. The advantage is confirmed experimentally: the Mach number sensitivity of the butterfly valve of Figure 1 is in the range of 30%, and that of the butterfly in Figure 2 is typically less than 5% at the throttle angles where high Mach number flow is typically encountered.     It was also found experimentally that the great bulk of the Mach number sensitivity of the butterfly of Figure 2 occurred on the downwardly pivoting side of the throttle, as would have been expected.

For a rectangular flapper valve pivoting on only one end the downwardly pivoting throttle fluid mechanics · can be eliminated.   Figure 3 shows an example wherein rectangular flapper valve 42 pivots on shaft 41 and communicates between a generally rectangular passage 40 upstream and a generally rectangular passage 44 downstream. As the flapper 42 pivots, increasing angle θ produces a larger open area.   Flow converges along convergent surface 142 which stabilizes the flow streamlines upstream of separation point 146.   The high speed flow from surface 142 naturally attaches to the surface 45 of passage 44 according to the coanda effect.   The re-circulating parasitic vortex 148 driven by this main flow is stabilized and deflected by cusp geometry 143, which assures that the recirculating vortex 148 interacts with the main flow in a smooth and substantially tangential manner, minimizing geometrical changes in the vena contracta due to pressure drops across the valve 42.   It has been found experimentally that a flapper valve such as is shown in Figure 3 is very insensitive to variation of Mach number and Reynolds number, and that it therefore is useful in applications which combine a simple throttle and a metering function.   The smooth interaction of the main stream and the parasitic vortex 148 also greatly reduces turbulent dissipation of the coanda wall attached stream downstream of the vena contracta.

Another embodiment of this invention is illust-rated in Figure 4 of the drawings wherein a flapper valve 200 is pivotally mounted on shaft 202 to control flow in an intake port runner passage 204 for feeding an intake port of an internal combustion engine according to United States Patent No. 4,344,494. Passage 204 has an upstream section 206 and a downstream section 208.

As shown, the flapper valve 200 has an upstream face 210 which smoothly converges in the direction of flow and a downstream face 212 which is concavely shaped to form a cusp section. Both faces terminate to form end 214. Flapper valve 200 with the aforedescribed shape causes the flow in the upstream section 206 to smoothly merge toward the variable opening formed by the valve so that a portion thereof attaches to the downstream section 208 of the passage 204. A parasitic vortex 220 forms on the downstream side of the valve 200 and aids in controlling flow past the variable opening by tangentially engaging said flow. In this way dissipation of flow energy from the high speed stream flowing through the variable opening can be minimized so that more flow energy is available to perform a useful mixing and flame accelerating function in the combustion chamber of an internal combustion engine.

Figure 4 shows a flapper valve in an intake port runner passage for feeding an intake port of an internal combustion engine according to United States Patent No. 4,344,494. In this embodiment the smooth convergence and cusped section of the flapper valve serves to smoothly merge the throttled flow which attaches to the wall of said port with the parasitic vortex which fills the runner passage, thereby significantly reducing turbulent dissipation of the high speed stream from the throttle. In this way dissipation of flow energy from said high speed stream can be minimized, so that more energy is available to perform a useful mixing and flame accelerating function in an internal combustion engine.

Figures 5, 5A and 5B show views of a slotted shaft plug valve which can be positively linked to an air throttle valve analogous to the flapper valve shown in Figure 3 as part of a fuel air metering system. The slotted shaft valve has the virtue that it combines Reynolds and Mach number insensitivity of coeffieicnt of discharge with a geometry conducive to small throttling passage cross sections. Referring to Figure 5, a rectangularly slotted shaft 160 rides in a closely fitted receiver sleeve 162 having generally rectangular flow passages in it, and slotted shaft 160 is one part of the throttle shaft which also actuates the air throttle shown in phantom lines as 172. The flow in the fuel valve is from left to right, and surface 164 forms a smoothly convergent passage shape which will be characterized by exceptionally thin boundary layers because of the rapid change in static pressure of the flow streamlines as they flow towards the gap between plug slot 160 and bottom surface 166 of sleeve 162. It is required that the coefficient of discharge as a function of shaft angle of the valve formed by 160 and 162 also be characterized by an insensitivity of coefficient of discharge to variations in pressure drop (and hence Reynolds number) across this valve. Because the fuel flow valve handles an incompressible fluid, Mach number is not relevant, but Reynolds number insensitivity matters.

The flow shaping details on the fuel valve required to achieve Reynolds number insensitivity are shown in Figures 5 with section Figure 5A taken on section AA and Figure 5B taken on section BB. Figure 5A is a view from the inlet passage. Fuel from a relatively large inlet passage 179 flows into the generally rectangular passage of sleeve 162 through rounding entrance curvature 176, and flows through the rectangular passage until it contacts convergent surface 164, passing through the gap between surface 166 and 164 which forms the variable flow area of the valve.    A number of issues illustrated in
Figure 5A are important.    First of all, the relatively
large area of the passage 179 is important.    Because of
this large area, velocities in passages 179 are small, and
therefore the difference between stagnation pressures and
static pressures shrinks to insignificance.    Another
important issue is the rounded curvature of entrance
surfaces 176, where the flow goes from the much larger
passage to the rectangular slot leading to surface 164.
When the fuel valve is operated at angles which are
relatively closed, the pressure drop  across this entrance
section is relatively insignificant, but the pressure drop
at the entrance surfaces 176 and directly downstream of
them becomes quite significant as the valve opens.    When
the valve is in relatively open condition, it behaves as
two orifices in series, the first being the fixed orifice
formed by curved surfaces 176 and the second being the
orifice formed for the gap between surface 166 and the end
point of surface 164 on slotted shaft 160.    By changing
the curvature of curved surface 176, it is therefore
possible to change the coefficient of discharge (and therefore the effective flow area) of the valve of Figure 5 as a
function of shaft rotation.

        Reynolds number insensitivity of the fuel valve
also requires that the flow conditions downstream of the
valve be properly controlled.    Figure 5B in combination
with Figure 5 shows how this can be done conveniently.    As
slotted shaft 160 rotates counterclockwise in Figure 5 the
fuel valve opens and there is a gap between surface 166 and
surface 164 through which fuel passes.    The high velocity
fuel passing through this gap rushes downstream, and it is
desirable to dissipate the velocity of this flow into
turbulence with minimum pressure recovery if the fuel valve
is to show optimal Reynolds number insensitivity.    For
small values of throttle opening this is almost automatic but the problem becomes more difficult as the throttle valves open. Reynolds number insensitivity, and minimum pressure recovery, are achieved by the most sudden convenient expansion of the fuel in the downstream section, and by arranging flow patterns to prevent wall attached streams from forming. Coanda wall attached streams should be avoided since such attached streams are conducive to larger values of pressure recovery than otherwise occur downstream of the fuel valve. Downstream of surface 166 is cutaway surface 170 which assures that the high velocity flow stream cannot attach to the lower wall of the downstream passage. The high velocity jet from the fuel valve expands rapidly in an expansion chamber formed by cutaway section 170 and passage 184. In order to reduce pressure recovery further, it is desirable that the axial width of passage 184 be increased as shown in Figure 5B, although this is usually not necessary for ordinary system accuracy. With the sudden expansions, the fluid pressure in large passage 186 becomes very close to the vena contracta static pressure for which the fuel flow equation is exactly defined.

Referring to Figure 6, there is illustrated a fuel valve arrangement quite similar to that shown in Figure 5 except in Figure 6 the downstream face of the valve is of cusp geometry.

More particularly, slotted shaft 160 has a smoothly convergent upstream face 164 which co-operates with surface 166 to form the variable area for fuel flow. Slotted shaft 160 is provided with a cusp face 190 on its downstream side. This cusped geometry reduces the effect of the relatively dissipated recirculating flow on the vena contracta geometry and therefore produces a coefficient of discharge sensitivity less than that of the valve illustrated in Figure 5.

-13-

The disclosures in United States Patents Nos.
4,318,386, 4,318,868 and 4,344,494 are incorporated herein
by reference in the event more details may be needed.

What is claimed is:

1.     In a fluid control throttling valve for varying the throttling cross sectional area of flow as a function of shaft angle $\theta$, said cross section varying according to the relation $Aa = b_1 (K_1 - \cos \theta)$ where $K \leq 1$, where $b_1$ is a constant of proportion, said valve comprising a smoothly convergent surface directly upstream of said throttling cross sectional area and a downstream cusp face curving so as to stabilize a parasitic entrained vortex so that the merger of the convergent flow past said throttling cross sectional area with the downstream entrained vortex produces a substantially constant vena contracta area and thus a constant coefficient of discharge over the relevant operating Mach and Reynolds number range, of said throttling valve.

2.     The invention as set forth in Claim 1 and wherein means are provided for pivotally mounting the valve.

3.     In a fluid control throttling valve for varying the throttling cross sectional area of flow as a function of shaft angle $\theta$, said cross section varying according to the relation $Aa = b_1 (K_1 - \cos \theta)$ where $K_1 \leq 1$ where $b_1$ is a constant of proportionality said valve comprising a smoothly convergent surface directly upstream of said throttling cross sectional area and a downstream cusp face curving so as to stabilize the parasitic entrained vortex formed downstream of the throttling cross sectional area whereby the merger of the convergent flow past said throttling cross sectional area with the downstream entrained vortex produces minimum turbulent dissipation of said convergent flow to maximize flow velocity of said convergent flow into a downstream flow element.

4.     The invention as set forth in Claim 3 and wherein means are provided for pivotally mounting the valve.

5.        The invention as set forth in Claim 4 and wherein the means provided for pivotally mounting the valve allows the valve to swing about one end thereof.

6.        In a fluid control throttling valve assembly for varying the throttling cross sectional area of flow as a function of shaft angle $\theta$, said cross section varying according to the relation

$$Aa = b_1 (K_1 - Cos\ \theta)$$
$$where\ K_1 \leq 1$$

where $b_1$ is a constant of proportionality said valve comprising a smoothly convergent surface directly upstream of said throttling cross sectional area, an expansion chamber immediately downstream of the throttling cross sectional area to produce a fluid mechanically disruptive and very high expansion ratio sudden expansion directly downstream of the vena contracta of said flow so that the recirculating fluid downstream of the throttling cross sectional area with which said vena contracta flow interacts is of relatively low velocity so that the merger of the convergent flow past said throttling cross sectional area of flow with the downstream entrained recirculating flow produces a substantially constant vena contracta area and thus a constant coefficient of discharge over the relevant operating Mach and Reynolds number range, of said throttling valve.

7.        The invention as set forth in Claim 6 and wherein means are provided for rotatably mounting the valve.

8.        In a fluid control throttling valve assembly for varying the throttling cross sectional area of flow as a function of shaft angle $\theta$, said cross section varying according to the relation

$$Aa = b_1 (K_1 - Cos\ \theta)$$
$$where\ K_1 \leq 1$$

where $b_1$ is a constant of proportionality said valve comprising a smoothly convergent surface directly upstream of said throttling cross sectional area, an expansion chamber immediately downstream of the throttling cross sectional area to produce a fluid mechanically disruptive and very high expansion ratio sudden expansion directly downstream of the vena contracta of said flow so that the recirculating fluid downstream of the throttling cross sectional area with which said vena contracta flow interacts is of relatively low velocity and a downstream cusp face curving so as to stabilize the recirculating flow whereby the merger of the convergent flow past said throttling cross sectional area of flow with the downstream entrained recirculating flow produces a substantially constant vena contracta area and thus a constant coefficient of discharge over the relevant operating Mach and Reynolds number range, of said throttling valve.

9.        The invention as set forth in Claim 8 and wherein means are provided for rotatably mounting the valve.

FIG. 1

FIG. 2

FIG. 3

FIG. 4

FIG. 5

FIG. 5A

FIG.5B

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | F 16 K 1/22 |
| D,P X | US-A-4 318 868 (SHOWALTER) | 1-9 | F 02 D 9/10 |
| | * abstract; column 4, lines 27-40; column 6, lines 51-59; column 10, lines 19-65; column 13, lines 1-68; column 14, lines 1-68; column 15, lines 1-8; figures 1,3,5,5A,5B * | | |
| | --- | | |
| A | GB-A- 413 306 (GRACE) * page 1, lines 62-89; page 2, lines 85-88; page 6, lines 68-88; figures 1,2 * | 1,2 | |
| | --- | | |
| A | US-A-3 903 215 (COLE) * abstract; column 3, lines 53-68; column 4, lines 1-7; figure 1 * | 1 | |
| | | | TECHNICAL FIELDS SEARCHED (Int. Cl. ³) |
| | --- | | |
| A | FR-A-2 202 245 (KELLER) * page 1, lines 1-5; page 2, lines 11-30; page 3, lines 17-30 * | 1 | F 16 K F 02 D |
| | --- | | |
| A | REGELUNGSTECHNISCHE PRAXIS UND PROZESS-RECHENTECHNIK, vol.13, October 1973, München (DE) E. HERZFELD: "Die minitork-Stellklappe", pages 186-188 * See page 186, right-hand column, page 187, left-hand column, right-hand column * | 1 | |
| | ---     -/- | | |

The present search report has been drawn up for all claims

| Place of search | Date of completion of the search | Examiner |
|---|---|---|
| THE HAGUE | 10-01-1983 | JORIS J.C. |

**European Patent Office**

## EUROPEAN SEARCH REPORT

EP   82 30 5068

| | DOCUMENTS CONSIDERED TO BE RELEVANT | | Page   2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | GB-A-1 396 306  (POLAK)<br>* page 1, lines 47-90; page 2, lines 1,2 *<br><br>----- | 1 | |
| | | | **TECHNICAL FIELDS SEARCHED (Int. Cl. ³)** |

The present search report has been drawn up for all claims

| Place of search<br>THE HAGUE | Date of completion of the search<br>10-01-1983 | Examiner<br>JORIS J.C. |
|---|---|---|